# EUROPÄISCHE PATENTANMELDUNG

(11) **EP 1 188 538 A2**
(43) Veröffentlichungstag der Anmeldung: **20.03.2002**
(21) Anmeldenummer: 01120933.5
(22) Anmeldetag: 31.08.2001
(51) Int. Cl.: B29C 45/38

(54) **Verfahren und Spritzgusswerkzeug zum Formen eines Kunststoffteils, insbesondere eines Kotflügels und Verkleidungsteile für Kraftfahrzeuge**

(30) Priorität: 16.09.2000 DE 10045966; 02.12.2000 DE 10059958
(71) Anmelder: Dynamit Nobel Kunststoff GmbH, 91781 Weissenburg (DE)
(72) Erfinder: Sörgel, Gerhard, 91781 Weissenburg (DE)
(74) Vertreter: Scherzberg, Andreas, Dr.

(57) **Zusammenfassung**

Die Erfindung betrifft ein Verfahren zum Formen eines Kunststoffteils (7), insbesondere eines Kotflügels und Verkleidungsteile für Kraftfahrzeuge, in einem Spritzgussverfahren durch seitliches Anspritzen über einen Seiten- oder Filmanguss (8), wobei das fertige Kunststoffteil eine sichtbare Außenfläche (11) und eine unsichtbare Innenfläche aufweist, mit einem Werkzeug bestehend aus einem Kern (9) und einer Matrize (10), wobei zwischen diesen ein Hohlraum gebildet ist, der der Form des Kunststoffteils (7) entspricht.

Damit eine Nacharbeit bezüglich des Angusses entfällt, wird vorgeschlagen, dass die Anspritzfläche auf die unsichtbare Innenfläche gelegt wird und dass der Anguss (8) beim Öffnen des Werkzeugs auf seiner gesamten Länge durch ein über Schieber (1, 2) betätigtes Messer (3) abgeschnitten oder eingekerbt wird.

Außerdem ist noch ein dazugehöriges Spritzgusswerkzeug angegeben.

## Beschreibung

Die Erfindung betrifft ein Verfahren zum Formen eines Kunststoffteils, insbesondere eines Kotflügels und Verkleidungsteile für Kraftfahrzeuge, in einem Spritzgussverfahren durch seitliches Anspritzen über einen Seiten- oder Filmanguss, wobei das fertige Kunststoffteil eine sichtbare Außenfläche und eine unsichtbare Innenfläche aufweist, mit einem Werkzeug bestehend aus einem Kern und einer Matrize, wobei zwischen diesen ein Hohlraum gebildet ist, der der Form des Kunststoffteils entspricht. Ferner betrifft die Erfindung ein Spritzgusswerkzeug zur Durchführung des Verfahrens.

Kunststoffteile, die seitlich über einen Seiten- oder Filmanguss angespritzt werden, müssen nachträglich durch Mehraufwand mittels Fräsen, Schneiden oder Stanzen bearbeitet werden, um Reste des Angusses zu entfernen. Durch diese Bearbeitung wird meistens die Außenfläche sichtbar verändert. Außerdem ist diese Nachbearbeitung kostenintensiv.

Der Erfindung liegt daher die Aufgabe zugrunde, ein Verfahren zum Formen eines Kunststoffteils und ein dazugehöriges Spritzgusswerkzeug anzugeben, bei dem keine Nacharbeit anfällt.

Erfindungsgemäß wird diese Aufgabe bezüglich des Verfahrens dadurch gelöst, dass die Anspritzfläche auf die unsichtbare Innenfläche gelegt wird und dass der Anguss beim Öffnen des Werkzeugs auf seiner gesamten Länge durch ein über Schieber betätigtes Messer abgeschnitten oder eingekerbt wird.

Durch das automatische Abschneiden oder Einkerben des Angusses noch im Werkzeug ist keine Nacharbeit nötig. Da die Anspritzfläche auf die unsichtbare Innenfläche des Kuststoffteils gelegt ist, sind eventuelle sichtbare Reste des Angusses nicht störend.

Vorteilhafterweise erfolgt das Angussabtrennen über die Maschinenprogrammierung durch Einkerben oder Abschneiden nach der Nachdruckphase des Spritzvorganges. Das komplette Angussabtrennen erfolgt beim Einkerben mit der Werkzeugöffnung durch den Kern.

Hierbei wird bevorzugt der vom Messer abgeschnittene oder eingekerbte Anguss über zumindest einen Angussauswerfer aus der Form gestoßen. Zweckmäßigerweise wird zusätzlich ein Abdrücker verwendet.

Ein erfindungsgemäßes Spritzgusswerkzeug ist gekennzeichnet durch die Merkmale des Anspruchs 5.

Erfindungsgemäß ist im Spritzgusswerkzeug zumindest ein Angussauswerfer angeordnet, der den Anguss aus der Form stößt.

Weitere Merkmale der Erfindung ergeben sich aus den Figuren, die nachfolgend beschrieben sind. Es zeigt:
- Fig. 1a, 1b: in Ausschnitten ein geschlossenes Spritzgusswerkzeug mit einem gespritzten Kunststoffteil noch in der Form,
- Fig. 2a, 2b: in Ausschnitten ein geschlossenes Spritzgusswerkzeug mit einem ausgefahrenen Messer, welches den Anguss schon abgetrennt oder eingekerbt hat,
- Fig. 3, 4: ein geöffnetes Spritzgusswerkzeug mit betätigtem Angussauswerfer und Abdrücker und dadurch entformten Anguss und entformten Kunststoffteil.

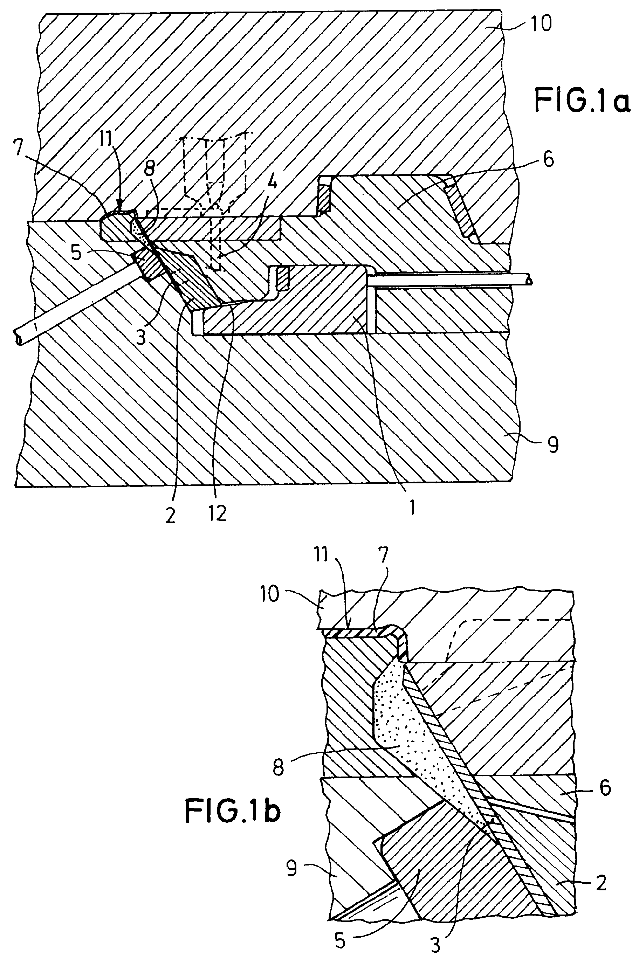

Fig. 1a und Fig. 1b zeigen ein erfindungsgemäßes Spritzgusswerkzeug für Kunststoffteile mit einem Kern 9 und einer Matrize 10. Zwischen diesen ist ein schon fertig gespritztes Kunststoffteil 7 angeordnet. Die sichtbare Außenfläche 11 dieses Kunststoffteils 7 ist zur Matrize 10 hin angeordnet. Nachfolgend werden nur die wesentlichen erfindungsgemäßen Merkmale beschrieben. Die anderen Teile dieses Spritzgusswerkzeugs sind wie bei Spritzgusswerkzeugen üblich, ebenfalls vorhanden.

Das Kunststoffteil 7 wurde durch seitliches Anspritzen über einen Seiten- oder Filmanguss 8 gefertigt. Zur Abtrennung dieses Angusses 8 ist im mechanisch betätigten Hauptschieber 6 ein hydraulisch betätigter Schieber 1 angeordnet. Dieser weist an seinem Ende eine Schräge 12 auf, auf der ein weiterer Schieber 2 aufliegt. An diesem weiteren Schieber 2 ist ein Messer 3 befestigt, welches so positioniert ist, dass es im ausgefahrenen Zustand den Anguss 8 abtrennt.

Fig. 1a zeigt das Messer 3 noch im eingefahrenen Zustand, d. h. der Anguss ist noch nicht abgetrennt. Fig. 1b zeigt in einem vergrößerten Ausschnitt dieses Messer 8 anliegend am Anguss 8, bzw. dem Kunststoffteil 7.

Die weiteren Teile des Spritzgusswerkzeugs werden anhand der nachfolgenden Figuren erläutert.

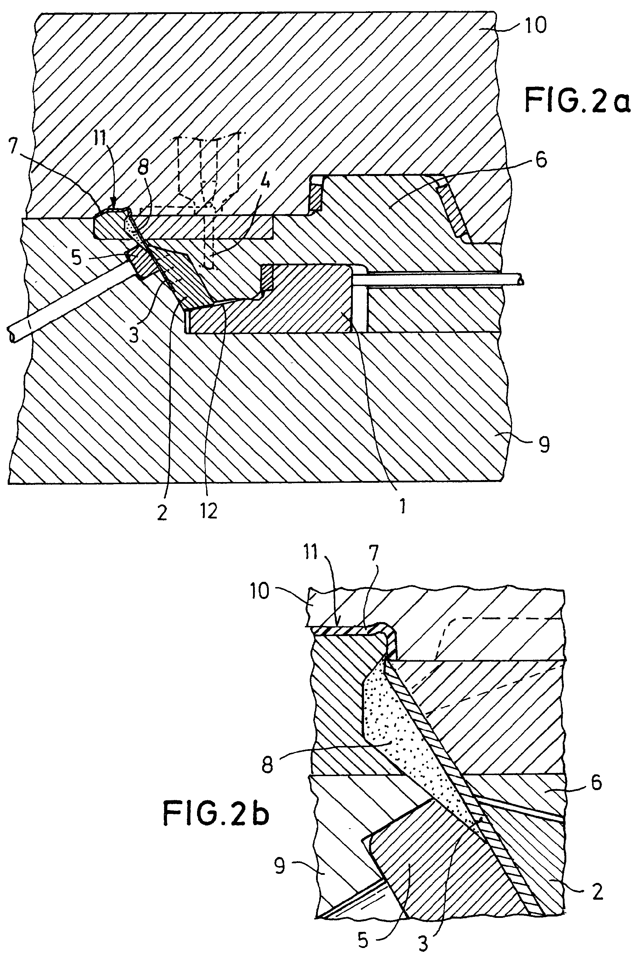

Fig. 2a, 2b zeigen dasselbe Spritzgusswerkzeug wie Fig. 1a, 1b, nur ist hier das Messer 3 ausgefahren, d. h. der hydraulisch betätigte Schieber 1 ist ausgefahren, wodurch der weitere Schieber 2 auf der Schräge 12 hochrutscht. Da das Messer 3 am weiteren Schieber 2 befestigt ist, wird durch diese Hubbewegung der Anguss 8 abgetrennt bzw. eingekerbt.

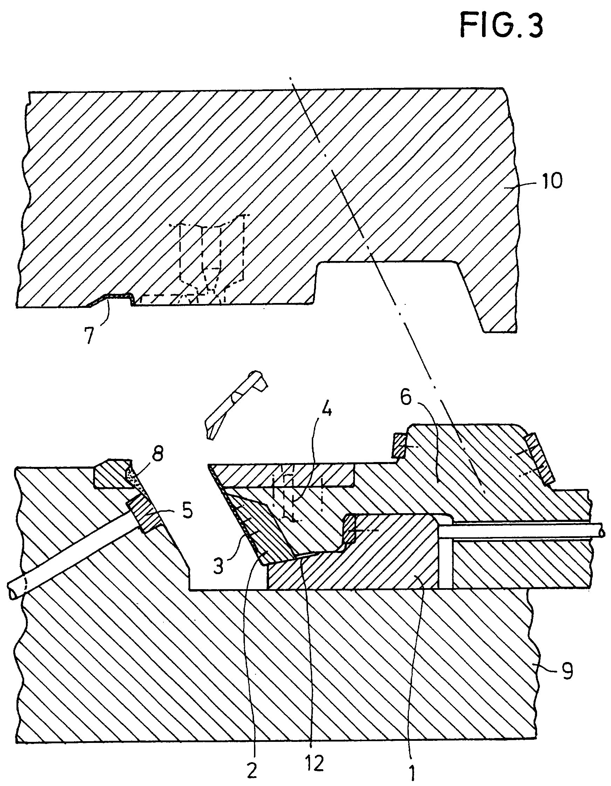

Fig. 3 zeigt das eben beschriebene Spritzgusswerkzeug im geöffneten Zustand. Der Hauptschieber 6 mit dem Schieber 1 und dem weiteren Schieber 2 ist seitlich ausgefahren und ein Angussauswerfer 4 wird mechanisch über eine Kulisse betätigt. Das Kunststoffeil 7 sitzt noch in der Matrize 10.

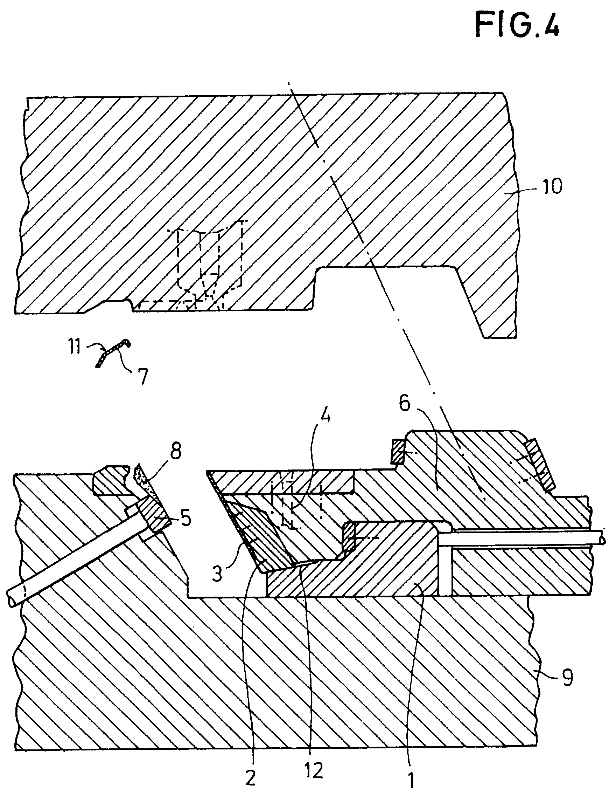

Fig. 4 zeigt das eben beschriebene Spritzgusswerkzeug im nächsten Verfahrensschritt. Im Kern 9 ist ein hydraulisch betätigter Abdrücker 5 angeordnet.

Dieser Abdrücker 5 stößt den restlichen Anguss 8 aus der Form . Das Kunststoffteil 7 wird aus der Matrize 10 entformt und hat nun keinen Anguss mehr. Die sichtbare Angussfläche ist frei von Beschädigungen, da der Anguss auf der unsichtbaren Innenfläche angeordnet war.

Bevorzugt wird dieses Verfahren bzw. Werkzeug für Kotflügel und Verkleidungsteile für Kraftfahrzeuge verwendet.

## Patentansprüche

1. Verfahren zum Formen eines Kunststoffteils (7), insbesondere eines Kotflügels und Verkleidungsteile für Kraftfahrzeuge, in einem Spritzgussverfahren durch seitliches Anspritzen über einen Seiten- oder Filmanguss (8), wobei das fertige Kunststoffteil eine sichtbare Außenfläche (11) und eine unsichtbare Innenfläche aufweist, mit einem Werkzeug bestehend aus einem Kern (9) und einer Matrize (10), wobei zwischen diesen ein Hohlraum gebildet ist, der der Form des Kunststoffteils (7) entspricht, **dadurch gekennzeichnet, dass** die Anspritzfläche auf die unsichtbare Innenfläche gelegt wird und dass der Anguss (8) beim Öffnen des Werkzeugs auf seiner gesamten Länge durch ein über Schieber (1, 2) betätigtes Messer (3) abgeschnitten oder eingekerbt wird.

2. Verfahren nach Anspruch 1, **dadurch gekennzeichnet, dass** das Öffnen des Werkzeugs und die Angussabtrennung bzw. Angusseinkerbung über die Maschinenprogrammierung erfolgt.

3. Verfahren nach Anspruch 1 oder 2, **dadurch gekennzeichnet, dass** der vom Messer (3) abgeschnittene oder eingekerbte Anguss (8) über zumindest einen Angussauswerfer (4) aus der Form gestoßen wird.

4. Verfahren nach Anspruch 3, **dadurch gekennzeichnet, dass** zusätzlich ein Abdrücker (5) verwendet wird.

5. Spritzgusswerkzeug zum Formen eines Kunststoffteils (7), insbesondere eines Kotflügels und Verkleidungsteile für Kraftfahrzeuge, durch seitliches Anspritzen über einen Seiten- oder Filmanguss (8), wobei das Kunststoffteil (7) im fertigen Zustand eine sichtbare Außenfläche (11) und eine unsichtbare Innenfläche aufweist und das Werkzeug aus einem Kern (9) und einer Matrize (10) besteht, wobei zwischen diesen ein Hohlraum angeordnet ist, der der Form des Kunststoffteils (7), entspricht, zur Durchführung des Verfahrens nach einem der Ansprüche 1 bis 4, **dadurch gekennzeichnet, dass** die Anspritzfläche an der unsichtbaren Innenfläche des Kunststoffteils (7) angeordnet ist und im Kern (9) ein von einem Schieber (1, 2) betätigtes Messer angeordnet ist, welches beim Öffnen des Werkzeugs den Anguss (8) auf seiner gesamten Länge abschneidet oder einkerbt.

6. Spritzgusswerkzeug nach Anspruch 5, **dadurch gekennzeichnet, dass** im Spritzgusswerkzeug zumindest ein Angussauswerfer (4) angeordnet ist, der den Anguss (8) aus der Form stößt.

7. Kunststoffteil, insbesondere ein Kotflügel und Verkleidungsteile für Kraftfahrzeuge, hergestellt mit einem Verfahren nach einem der Ansprüche 1 bis 4 und einem Spritzgusswerkzeug nach Anspruch 5 oder 6.
